# EUROPÄISCHE PATENTSCHRIFT

(11) **EP 3 588 012 B1**
(45) Veröffentlichungstag und Bekanntmachung des Hinweises auf die Patenterteilung: **06.07.2022**
(21) Anmeldenummer: 19174830.0
(22) Anmeldetag: 16.05.2019
(51) Int. Cl.: G01D 3/08, G01D 21/02, G01D 21/00

(54) **VERFAHREN, VORRICHTUNG UND SYSTEM ZUR ERFASSUNG EINES MANIPULATIONSVERSUCHES AN EINEM SENSOR EINES FAHRZEUGES UND SENSOR**
METHOD, DEVICE AND SYSTEM FOR DETECTING TAMPERING ATTEMPT ON A SENSOR OF A VEHICLE AND SENSOR
PROCÉDÉ, DISPOSITIF ET SYSTÈME DE DÉTECTION D'UN ESSAI DE MANIPULATION SUR UN CAPTEUR D'UN VÉHICULE ET CAPTEUR

(30) Priorität: 21.06.2018 DE 102018210132
(43) Veröffentlichungstag der Anmeldung: 01.01.2020
(73) Patentinhaber: Continental Automotive GmbH, 30165 Hannover (DE)
(72) Erfinder: Dohmen, Ralf, 78050 Villingen-Schwenningen (DE); Bertl, Svenja, 78147 Vöhrenbach (DE); Walkner, Heiko, 78052 Villingen-Schwenningen (DE)
(74) Vertreter: Continental Corporation

(56) Entgegenhaltungen:
- CN-A- 106 969 818
- CN-B- 105 698 859
- DE-A1- 10 054 745
- DE-A1-102009 034 633
- DE-A1-102010 044 899
- DE-A1-102013 212 485
- DE-A1-102014 103 556

## Beschreibung

Es werden ein Verfahren, eine Vorrichtung und ein System zur Erfassung eines Manipulationsversuches an einem Sensor eines Fahrzeuges angegeben.

Aus CN 106 969 818 A ist eine Gewichtsüberwachungsvorrichtung, -verfahren und -system eines Fahrzeugs bekannt. Bei Überschreiten einer vorgegebenen Temperaturgrenze wird ein Alarmsignal generiert.

DE 10 2010 044 899 A1 offenbart ein Verfahren zur Vorhersage einer Temperatur eines Radlagers eines Rades eines Fahrzeugs. Eine vorhergesagte Temperatur des Radlagers wird mithilfe eines Korrekturwerts ermittelt, welcher abhängig von einer Änderung der Temperatur des Radlagers innerhalb eines vergangenen Zeitintervalls bestimmt wird.

Aus CN 105 698 859 B ist ein Mehrparameter-Sensor bekannt. Unter anderem Schwingungsparameter, Aufprallparameter und Temperaturparameter können gemeinsam überwacht werden.

Eine Vorrichtung zur Umwandlung einer physikalischen Messgröße in ein elektrisches Signal offenbart DE 100 54 745 A1. Die Vorrichtung umfasst mehrere Sensorelemente, die Drucksensoren mit integrierter Temperaturmesseinrichtung sein können.

Aus DE 10 2013 212 485 A1 ist eine Sensoranordnung mit einem Träger, auf dem ein erster Sensor und ein zweiter Sensor angeordnet sind, bekannt. Der erste Sensor kann als Gassensor ausgebildet sein, und der zweite Sensor kann ein Temperatursensor sein.

Eine Sensorbaugruppe eines Belüftungssystems eines Fahrzeuginnenraums offenbart DE 10 2009 034 633 A1. Die Sensorbaugruppe weist unter anderem einen CO₂-Sensor auf. Sie kann zusätzlich einen Temperatursensor aufweisen.

Aus DE 10 2014 103 556 A1 ist ein Sensorsystem mit einer ersten Sensorvorrichtung zum Erfassen eines physikalischen Merkmals und mit einer zweiten Sensorvorrichtung zum Erfassen desselben physikalischen Merkmals wie die erste Sensorvorrichtung bekannt. Das Sensorsystem kann eine zusätzliche Sensorvorrichtung umfassen, die ein Temperatursensor ist.

Eine zu lösende Aufgabe besteht darin, ein Verfahren anzugeben, mit dem ein Manipulationsversuch an einem Sensor eines Fahrzeuges detektiert werden kann. Weitere zu lösende Aufgaben bestehen darin, eine Vorrichtung und ein System anzugeben, mit denen ein solches Verfahren ausgeführt werden kann.

Das Verfahren zur Erfassung eines Manipulationsversuches an einem Sensor eines Fahrzeuges weist die Merkmale des Anspruchs 1 auf.

Bei dem Sensor handelt es sich bevorzugt um einen fahrzeuginternen Sensor, also einen Sensor, der auch während einer Fahrt des Fahrzeugs im Fahrzeug verbaut und im Betrieb ist.

Bei der ersten Messgröße handelt es sich insbesondere um eine mit dem Sensor zu messende physikalische Größe. Die erste Messgröße beschreibt bevorzugt nicht eine Temperatur des Sensors. Die erste Messgröße ist also die physikalische Größe, die letztendlich mit dem Sensor betrachtet werden soll. Der Messwert einer Messgröße ist der Wert der Messgröße, der mit dem Sensor am Ort des Sensors und zum Zeitpunkt der Messung erfasst wird. Durch Auswerten und beispielsweise Umrechnen kann aus dem von dem Sensor ausgegebenen ersten Messsignal der Messwert für die erste Messgröße ermittelt werden. Zum Beispiel handelt es sich bei der ersten Messgröße um eine zu messende Kraft. Beispielsweise handelt es sich bei der ersten Messgröße um eine auf eine Achse des Fahrzeuges wirkende Kraft oder Kraftverteilung.

Das erste Messsignal ist zum Beispiel ein Signal, das von dem Sensor ausgegeben wird. Das erste Messsignal ist repräsentativ für den mit dem Sensor erfassten Messwert der ersten Messgröße. Das heißt, das erste Messsignal trägt Informationen über den erfassten Messwert der ersten Messgröße. Das erste Messsignal kann zum Beispiel ein analoges oder digitales Signal sein.

Das zweite Messsignal ist repräsentativ für einen Messwert der Temperatur des Sensors. Das heißt das zweite Messsignal trägt Informationen über die Temperatur des Sensors in dem Bereich, wo die Temperatur gemessen wird. Die vorgegebene Schwelle kann beispielsweise ein Schwellwert für die Temperatur sein. Überschreitet oder unterschreitet das zweite Messsignal beziehungsweise der von diesem repräsentierte Messwert den vorgegebenen Schwellwert, so wird dies als Manipulationsversuch gewertet und ein entsprechendes Ausgangssignal wird ausgegeben. Das zweite Messsignal kann zum Beispiel ein analoges oder digitales Signal sein.

Das Ausgangssignal ist repräsentativ für einen Manipulationsversuch an dem Sensor beziehungsweise an dem ersten Messsignal. Das heißt, das Ausgangssignal trägt Informationen darüber, ob ein Manipulationsversuch stattgefunden hat oder nicht. In einem einfachen Fall kann das Ausgangssignal ein digitales Signal sein, wobei zum Beispiel der Wert logisch 1 für einen Manipulationsversuch steht und der Wert logisch 0 dafür steht, dass kein Manipulationsversuch erkannt wurde.

Das Verfahren kann einen zusätzlichen Schritt umfassen, in dem das erste Messsignal ausgewertet wird. Dabei kann zum Beispiel der Messwert für die erste Messgröße ermittelt werden. Dieser zusätzliche Schritt kann vor, nach oder während den Schritten A), B) und C) ausgeführt werden.

Der vorliegenden Erfindung liegt insbesondere die Erkenntnis zu Grunde, dass bei Fahrzeugen, insbesondere bei Nutzfahrzeugen, zum Beispiel Kraftfahrzeugen, die Achslast mit Hilfe von Drucksensoren oder Niveausensoren oder Dehnmessstreifen ermittelt wird. Zum Beispiel besteht durch die Integration von fahrzeuginternen Wägesystemen, Englisch OnBoard Weighing System, die Möglichkeit, achslastspezifische technische Funktionen abzuleiten, zum Beispiel eine Reduzierung der Motorleistung bei hoher Achslast. Darüber hinaus können die Achslastdaten über Datenschnittstellen dem Fahrer beziehungsweise dem Fahrunternehmen zur Verfügung gestellt werden. Durch eine Manipulation des Wägesystems können solche Funktionen ausgehebelt beziehungsweise die Daten manipuliert werden, um sich einen Vorteil zu verschaffen.

Die Temperatur ist eine wichtige Einflussgröße bei solchen Systemen. Materialien dehnen sich mit zunehmender Temperatur aus. Elektronische Schaltungen verändern elektrische Größen, zum Beispiel den Widerstand, in Abhängigkeit der Temperatur. Durch eine geeignete Auslegung des mechanischen und elektronischen Systems ist sichergestellt, dass sich das Achslastmesssystem beziehungsweise der Sensor innerhalb des spezifizierten Betriebstemperaturbereichs spezifikationskonform verhält. Insbesondere durch die Auswahl von geeigneten Materialien und Bauformen, Bauteilauswahl, Schaltungsauslegung und Temperatur-Kompensationsmaßnahmen kann der Einfluss der Temperatur auf das Messresultat minimiert werden. Meist wird auch beschrieben, wie sich das System verhalten soll, wenn es außerhalb des Betriebstemperaturbereichs benutzt wird. Zum Beispiel liefert das System dann ungültige Messergebnisse. Außerdem wird üblicherweise davon ausgegangen, dass die Temperatur des Messsystems unwesentlich von der Temperatur der Systemumgebung abweicht.

Üblicherweise wird im Sensor ein Messaufnehmer, zum Beispiel ein Dehnmessstreifen, der zum Beispiel als Wheatstone'sche Messbrücke implementiert ist, verwendet. Dieser sendet beispielsweise ein analoges Signal zu einer im Sensor integrierten Auswerteelektronik, wie zum Beispiel ein Analog-Digital-Wandler, kurz ADC. Das analoge Signal wird dort digitalisiert.

Eine Manipulation des Sensors oder Systems kann zum Beispiel dadurch erfolgen, dass der Sensor oder das gesamte System außerhalb des spezifizierten Temperaturbereichs betrieben werden. Dies führt dazu, dass ungültige Messresultate geliefert werden. Beispielsweise kann dazu das System oder der Sensor erhitzt oder abgekühlt werden. Typischerweise wird eine Erhitzung angestrebt, weil diese einfacher zu realisieren ist, zum Beispiel durch eine elektrische Heizvorrichtung.

Ein solcher Manipulationsversuch wird vorliegend mit Hilfe des Verfahrens erkannt, in dem die Temperatur des Sensors ermittelt wird. Liegt die Temperatur oberhalb oder unterhalb einer vorgegebenen Schwelle, wird ein Manipulationsversuch erkannt.

Das zweite Messsignal ist repräsentativ für eine Temperatur eines ersten Bereichs des Sensors. Beispielsweise ist der erste Bereich ein Teilbereich des Sensors, in dem zum Beispiel ein erster Messaufnehmer zur Erfassung des Messwerts der ersten Messgröße angeordnet ist.

Das Verfahren umfasst einen Schritt A2), in dem ein drittes Messsignal eingelesen wird, das repräsentativ für eine Temperatur in einem von dem ersten Bereich verschiedenen zweiten Bereich des Fahrzeuges ist. Der zweite Bereich ist bevorzugt von dem ersten Bereich beabstandet. Der zweite Bereich kann ein beliebiger Bereich des Fahrzeuges sein, zum Beispiel ein Bereich einer Achse des Fahrzeuges. Bevorzugt ist der zweite Bereich, wie auch der erste Bereich, ein Teilbereich des Sensors, zum Beispiel ein Bereich des Gehäuses des Sensors. Der zweite Bereich kann jedoch auch ein Bereich außerhalb des Sensors sein.

Beispielsweise sind der erste Bereich und der zweite Bereich zumindest 5 cm oder zumindest 10 cm voneinander beabstandet. Alternativ oder zusätzlich können der erste Bereich und der zweite Bereich höchstens 50 cm oder höchstens 20 cm oder höchstens 10 cm voneinander beabstandet sein.

Die Schwelle wird abhängig von dem dritten Messsignal vorgegeben. Zum Beispiel wird die Schwelle dann als eine Differenzschwelle zwischen einem durch das zweite Messsignal repräsentierten Temperaturwert und einem durch das dritte Messsignal repräsentierten Temperaturwert vorgegeben.

Eine mögliche thermische Manipulation des Sensors besteht darin, verschiedene Bereiche mit unterschiedlichen Temperaturen zu betreiben. Zum Beispiel wird der Messaufnehmer des Sensors oder ein mit dem Messaufnehmer zu vermessender Bereich des Fahrzeugs mit einer anderen Temperatur beaufschlagt als der Rest des Fahrzeuges oder des Sensors. Umfasst der Messaufnehmer zum Beispiel einen Dehnmessstreifen, so kann dieser durch den Einsatz eines Kühlelements, wie ein Peltier-Element, herabgekühlt werden. Da die Temperatur an dem Dehnmessstreifen geringer ist als in der Umgebung, zieht sich der Dehnmessstreifen zusammen, wodurch ein verfälschtes Signal an die Auswerteelektronik geliefert wird.

Ein solcher Manipulationsversuch wird vorliegend dadurch erkannt, dass zwei Temperaturmessungen in unterschiedlichen Bereichen durchgeführt werden. Die Bereiche haben erwartungsgemäß bevorzugt gleiche oder ähnliche Temperaturen. Ist dies nicht der Fall und übersteigt zum Beispiel die Temperaturdifferenz der beiden Bereiche einen Schwellwert, so wird dies als Manipulationsversuch gewertet.

Gemäß zumindest einer Ausführungsform ist das zweite Messsignal repräsentativ für eine Temperatur, die mit einem dem Sensor zugeordneten zweiten Messaufnehmer erfasst wurde. Der zweite Messaufnehmer ist beispielsweise von dem ersten Messaufnehmer höchstens 10 cm oder höchstens 5 cm oder höchstens 1 cm beabstandet. Der zweite Messaufnehmer ist zum Beispiel Teil des Sensors.

Gemäß zumindest einer Ausführungsform ist das dritte Messsignal repräsentativ für einen Temperaturwert, der mit einem dritten Messaufnehmer erfasst wurde. Der dritte Messaufnehmer kann ebenso dem Sensor zugeordnet sein und beispielsweise Teil des Sensors sein. Insbesondere ist der dritte Messaufnehmer weiter von dem ersten Messaufnehmer beabstandet als der zweite Messaufnehmer. Dadurch liefert der zweite Messaufnehmer eine Temperatur, die besser die Temperatur beim ersten Messaufnehmer beschreibt als der dritte Messaufnehmer.

Gemäß zumindest einer Ausführungsform ist der Sensor ein Wägesensor, der einer Achse des Fahrzeugs zugeordnet ist. Der Wägesensor ist beispielsweise auf der Achse aufgebracht oder in der Achse integriert. Bei dem Wägesensor kann es sich um einen Drucksensor oder einen Niveausensor oder einen Sensor mit einem Dehnmessstreifen handeln.

Gemäß zumindest einer Ausführungsform werden die Schritte A1) bis C), eventuell zusammen mit dem Schritt A2), mehrmals hintereinander beziehungsweise periodisch ausgeführt. Die mehrfache Wiederholung der Schritte kann im eingeschalteten Zustand des Fahrzeuges, also bei eingeschalteter Zündung, oder im ausgeschalteten Zustand des Fahrzeuges, also bei ausgeschalteter Zündung, durchgeführt werden.

Gemäß zumindest einer Ausführungsform enthält oder trägt das Ausgangssignal Informationen darüber, zu welchem Zeitpunkt das Ausgangssignal erzeugt wurde.

Gemäß zumindest einer Ausführungsform wird nach der Ausgabe des Ausgangssignals im Schritt C) das Ausgangssignal an eine externe Datenverarbeitungsanlage weitergeleitet. Die Weiterleitung des Ausgangssignals erfolgt beispielsweise kabellos, zum Beispiel über Funk. Das Ausgangssignal kann dann außerhalb des Fahrzeuges ausgewertet werden und es kann bestimmt werden, ob und bevorzugt wann ein Manipulationsversuch stattgefunden hat.

Alternativ ist es aber auch möglich, dass das Ausgangssignal im Fahrzeug ausgewertet wird und anschließend beispielsweise dem Fahrzeugführer signalisiert wird, ob und wann ein Manipulationsversuch stattgefunden hat.

Eine Auswertung des Ausgangssignals kann beispielsweise unmittelbar nach der Ausgabe des Ausgangssignals erfolgen. Alternativ ist es auch möglich, das Ausgangssignal auf einem Speichermedium zu speichern und erst später auszuwerten.

Darüber hinaus wird eine Vorrichtung zur Erfassung eines Manipulationsversuches an einem Sensor eines Fahrzeuges angegeben. Die Vorrichtung ist dazu eingerichtet, ein Verfahren gemäß zumindest einer der zuvor beschriebenen Ausführungsformen durchzuführen. Die Vorrichtung umfasst insbesondere einen Prozessor. Weiter kann die Vorrichtung Schnittstellen zum Einlesen der ersten und/oder der zweiten Messsignale sowie zur Ausgabe des Ausgangssignals umfassen.

Ferner wird ein Sensor für ein Fahrzeug angegeben. Das oben beschriebene Verfahren kann insbesondere mit den von dem Sensor gelieferten ersten und/oder zweiten und/oder dritten Messsignalen durchgeführt werden. Alle im Zusammenhang mit dem Verfahren offenbarten Merkmale sind daher auch für den Sensor offenbart und umgekehrt.

Bei dem Sensor handelt es sich insbesondere um einen Wägesensor für ein Fahrzeug. Der Wägesensor kann beispielsweise ein Drucksensor oder ein Niveausensor oder ein Wägesensor mit einem Dehnmessstreifen sein.

Gemäß zumindest einer Ausführungsform umfasst der Sensor einen ersten Messaufnehmer zur Erfassung eines Messwertes einer ersten Messgröße. Die erste Messgröße ist bevorzugt verschieden von einer Temperatur.

Bei der ersten Messgröße handelt es sich um eine physikalische Größe, wie beispielsweise um eine Kraft oder um Druck. Der erste Messaufnehmer kann beispielsweise einen Dehnmessstreifen umfassen oder ein Dehnmessstreifen sein. Der Dehnmessstreifen ist beispielsweise in einer Wheatstone'schen Messbrücke implementiert.

Neben dem ersten Messaufnehmer umfasst der Sensor bevorzugt auch eine Auswerteelektronik, beispielsweise einen Analog-Digital-Wandler. Die Auswerteelektronik ist Teil des Sensors, also nahe dem ersten Messaufnehmer angeordnet. Ein maximaler Abstand der Auswerteelektronik zum ersten Messaufnehmer beträgt beispielsweise höchstens 15 cm oder höchstens 10 cm oder höchstens 5 cm. Mit der Auswerteelektronik kann das vom ersten Messaufnehmer erzeugte Signal insbesondere in ein weiterverarbeitbares erstes Messsignal, beispielsweise in ein digitales erstes Messsignal, umgewandelt werden. Der kleine Abstand zwischen der Auswerteelektronik und dem ersten Messaufnehmer reduziert die Gefahr, dass das vom ersten Messaufnehmer gelieferte, insbesondere analoge Signal, auf dem Weg zur Auswerteelektronik verfälscht wird.

Gemäß zumindest einer Ausführungsform umfasst der Sensor einen zweiten Messaufnehmer zur Erfassung einer Temperatur eines ersten Bereichs des Sensors. Der zweite Messaufnehmer ist insbesondere dazu eingerichtet, eine Temperatur des ersten Messaufnehmers oder im Bereich des ersten Messaufnehmers zu erfassen.

Die Begriffe "Temperatur", "Temperaturwert" und "Messwert der Temperatur" werden hier gleichbedeutend verwendet.

Anders ausgedrückt sind der erste Messaufnehmer und der zweite Messaufnehmer dazu eingerichtet, Messwerte unterschiedlicher Messgrößen, das heißt unterschiedlicher physikalischer Größen, zu erfassen. Die mithilfe des zweiten Messaufnehmers ermittelten zweiten Messsignale dienen dann zum Beispiel zur Kontrolle, ob die mithilfe des ersten Messaufnehmers gelieferten ersten Messsignale aufgrund einer Erhitzung oder Abkühlung verfälscht sind.

Der Sensor kann eine zweite Auswerteelektronik, zum Beispiel einen ADC, umfassen, an die der zweite Messaufnehmer Signale, insbesondere analoge Signale, übermittelt. Mit der zweiten Auswerteelektronik können dann die zweiten Messsignale erzeugt werden.

Es kann aber auch für beide Messaufnehmer die gleiche Auswerteelektronik verwendet werden.

Gemäß zumindest einer Ausführungsform umfasst der Sensor einen dritten Messaufnehmer. Der dritte Messaufnehmer ist zur Erfassung einer Temperatur eines von dem ersten Bereich verschiedenen zweiten Bereichs des Sensors eingerichtet. Beispielsweise ist der zweite Bereich ein Bereich, der die Auswerteelektronik umfasst. Die dritten Messsignale werden dann zum Beispiel mit Hilfe des dritten Messaufnehmers ermittelt.

Darüber hinaus wird ein System zur Erfassung eines Manipulationsversuches an einem Sensor eines Fahrzeuges angegeben. Das System umfasst eine hier beschriebene Vorrichtung sowie einen hier beschriebenen Sensor.

Ferner wird ein Fahrzeug angegeben. Das Fahrzeug umfasst ein hier beschriebenes System sowie eine Achse. Der Sensor ist der Achse zugeordnet. Bei dem Fahrzeug kann es sich um ein Nutzfahrzeug, insbesondere ein Kraftfahrzeug, wie beispielsweise einen LKW oder Bus oder PKW, handeln.

Nachfolgend werden ein hier beschriebenes Verfahren, eine hier beschriebene Vorrichtung, ein hier beschriebenes System sowie ein hier beschriebener Sensor unter Bezugnahme auf Zeichnungen anhand von Ausführungsbeispielen näher erläutert. Gleiche Bezugszeichen geben dabei gleiche Elemente in den einzelnen Figuren an. Es sind dabei jedoch keine maßstäblichen Bezüge dargestellt, vielmehr können einzelne Elemente zum besseren Verständnis übertrieben groß dargestellt sein.

Es zeigen:
Figuren 1A und 1B Ablaufdiagramme von Ausführungsbeispielen des Verfahrens,
Figur 2 einen manipulierten Sensor,
Figuren 3A und 3B Ausführungsbeispiele eines Sensors für ein Fahrzeug,
Figur 4 ein Ausführungsbeispiel eines Fahrzeuges.

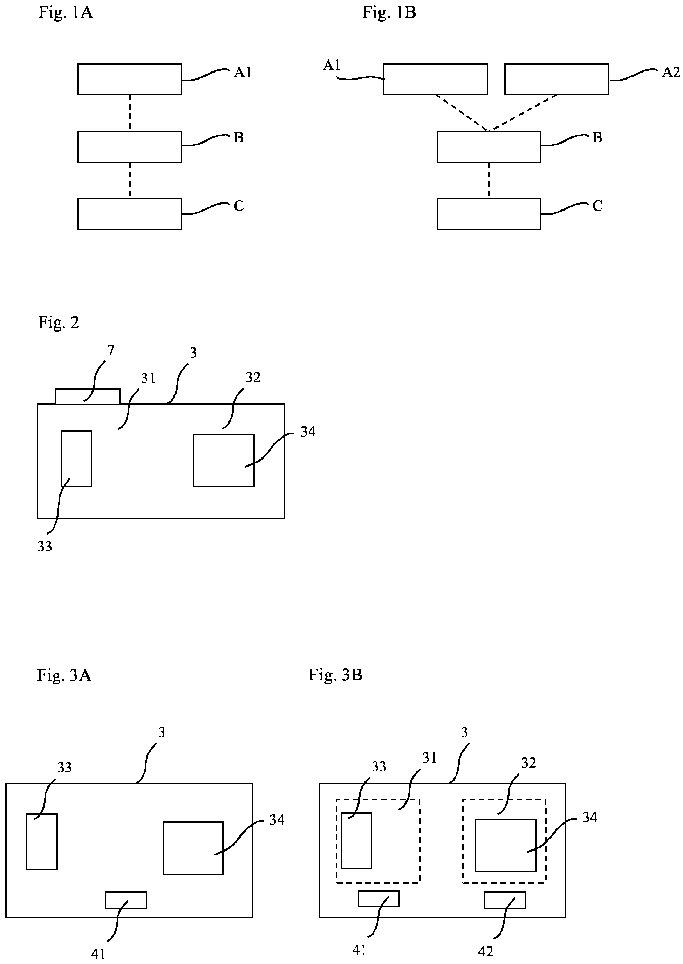

In der Figur 1A ist ein Ablaufdiagramm eines ersten Ausführungsbeispiels des Verfahrens zur Erfassung eines Manipulationsversuches an einem Sensor eines Fahrzeuges dargestellt, wobei der Sensor dazu eingerichtet ist, im bestimmungsgemäßen Betrieb einen Messwert einer ersten Messgröße zu erfassen und ein für den Messwert der ersten Messgröße repräsentatives erstes Messsignal auszugeben. In einem Schritt A1) wird ein zweites Messsignal eingelesen, das repräsentativ für eine Temperatur des Sensors ist. In einem Schritt B) wird ermittelt, ob das zweite Messsignal eine vorgegebene Schwelle unterschreitet oder überschreitet. Falls im Schritt B) ermittelt wird, dass das zweite Messsignal die vorgegebene Schwelle unterschreitet oder überschreitet, wird in einem Schritt C) ein Ausgangssignal ausgegeben, dass repräsentativ für einen Manipulationsversuch an dem Sensor ist.

In der Figur 1B ist ein Ablaufdiagramm eines zweiten Ausführungsbeispiels des Verfahrens zur Erfassung eines Manipulationsversuches an einem Sensor gezeigt, wobei der Sensor dazu eingerichtet ist, im bestimmungsgemäßen Betrieb einen Messwert einer ersten Messgröße zu erfassen und ein für diesen Messwert repräsentatives erstes Messsignal auszugeben. Wiederum umfasst das Verfahren die oben beschriebenen Schritte A1), B), C). Die von dem zweiten Messsignal repräsentierte Temperatur des Sensors ist dabei eine Temperatur in einem ersten Bereich des Sensors. Zusätzlich umfasst das Verfahren hier aber noch einen Schritt A2), der vorliegend beispielhaft parallel zum Schritt A1) ausgeführt wird und in dem ein drittes Messsignal eingelesen wird, das repräsentativ für eine Temperatur in einem vom ersten Bereich verschiedenen zweiten Bereich des Fahrzeuges ist.

In der Figur 2 ist ein Sensor 3 dargestellt, der einen ersten Messaufnehmer 33 und eine Auswerteelektronik 34 umfasst. Bei dem Sensor 3 handelt es sich beispielsweise um einen Wägesensor 3 für ein Fahrzeug. Der erste Messaufnehmer 33 kann zum Beispiel ein Dehnmesstreifen sein, der in einer Wheatstone'schen Messbrücke implementiert ist. Bei der Auswerteelektronik 34 kann es sich beispielsweise um einen Analog-Digital-Wandler handeln. Von dem ersten Messaufnehmer 33 werden im Betrieb analoge Signale zu der Auswerteelektronik 34 geschickt und in der Auswerteelektronik 34 zu digitalen, ersten Messsignalen umgewandelt.

Auf dem Sensor 3 ist ein Heiz- oder Kühlelement 7 angeordnet. Das Heiz- oder Kühlelement 7 ist zur Manipulation der Messergebnisse des Sensors 3 aufgebracht. Durch die von dem Heiz- oder Kühlelement 7 induzierte oder abgeführte Wärme werden die Messergebnisse des Sensors 3 ungültig oder verfälscht.

In der Figur 3A ist ein erstes Ausführungsbeispiel eines Sensors 3 dargestellt. Der Sensor 3 entspricht beispielsweise im Wesentlichen dem Sensor 3 der Figur 2, umfasst vorliegend aber zusätzlich einen zweiten Messaufnehmer 41. Der zweite Messaufnehmer 41 ist zur Erfassung einer Temperatur des Sensors 3 eingerichtet.

Mithilfe des zweiten Messaufnehmers 41 wird ein zweites Messsignal erzeugt, das repräsentativ für eine Temperatur des Sensors 3 ist. Überschreitet oder unterschreitet dieses zweite Messsignal eine vorgegebene Schwelle, so kann dies auf einen Manipulationsversuch am Sensor 3 hinweisen.

In der Figur 3B ist ein zweites Ausführungsbeispiel des Sensors 3 gezeigt. Anders als in der Figur 3A umfasst der Sensor 3 hier noch einen dritten Messaufnehmer 42, der wiederum zur Erfassung einer Temperatur des Sensors 3 eingerichtet ist. Der zweite Messaufnehmer 41 erfasst dabei die Temperatur des Sensors 3 in einem ersten Bereich 31. Der dritte Messaufnehmer 42 erfasst die Temperatur in einem zweiten Bereich 32, der von dem ersten Bereich 31 verschieden und beabstandet ist. Vorliegend umfasst der erste Bereich 31 den ersten Messaufnehmer 33. Der zweite Bereich 32 umfasst die Auswerteelektronik 34.

Wird zur Manipulation des Sensors 3 beispielsweise versucht, den ersten Messaufnehmer 33 zu erhitzen oder abzukühlen, so kann dieser Manipulationsversuch mit dem in der Figur 3B gezeigten Sensor 3 detektiert werden. Mithilfe des zweiten Messaufnehmers 41 wird ein zweites Messsignal erzeugt, das repräsentativ für eine Temperatur des Sensors 3 im ersten Bereich 31 ist. Mithilfe des dritten Messaufnehmers 42 wird ein drittes Messsignal erzeugt, das repräsentativ für eine Temperatur des Sensors 3 im zweiten Bereich 32 ist. Es kann nun abhängig von dem dritten Messsignal eine Schwelle vorgegeben werden. Sobald das zweite Messsignal diese Schwelle überschreitet oder unterschreitet, kann das auf einen Manipulationsversuch des Sensors 3 hinweisen. Beispielsweise wird als Schwelle eine maximale Temperaturdifferenz zwischen den durch die zweiten und dritten Messsignale repräsentierten Temperaturwerte im ersten 31 und zweiten 32 Bereich vorgegeben.

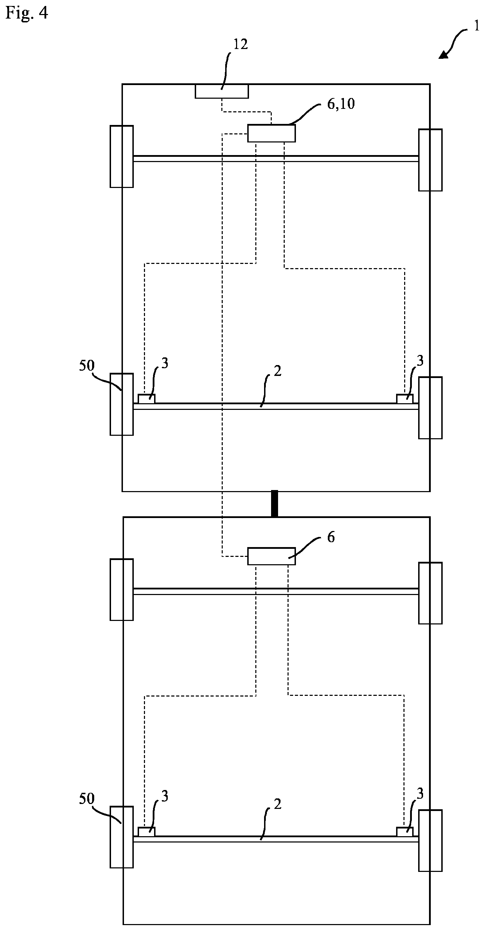

In der Figur 4 ist ein Ausführungsbeispiel eines Fahrzeuges 1 in Draufsicht dargestellt. Das Fahrzeug 1 umfasst eine Zugmaschine und einen Anhänger. Die Zugmaschine und der Anhänger sind auf Achsen 2 gelagert, an deren Enden Räder 50 angeordnet sind. Auf den Achsen 2 sind Sensoren 3 angeordnet.

Das Fahrzeug 1 umfasst außerdem ein Ausführungsbeispiel eines Systems zur Erfassung eines Manipulationsversuches an zumindest einem Sensor 3 des Fahrzeugs 1. Das System umfasst eine Vorrichtung 10 und mehrere der Sensoren 3. Die Sensoren 3 können zum Beispiel wie im Zusammenhang mit der Figur 3 beschrieben ausgebildet sein.

Die Vorrichtung 10 ist dazu eingerichtet, ein wie zuvor beschriebenes Verfahren durchzuführen. Die dazu nötigen zweiten und eventuell dritten Messsignale werden von den Sensoren 3 geliefert. Sowohl die Zugmaschine als auch der Anhänger umfassen eine Steuereinheit 6, über die die zweiten und eventuell dritten Messsignale zur Vorrichtung 10 geleitet werden. Die Vorrichtung 10 umfasst zum Beispiel einen Prozessor sowie Schnittstellen für den Eingang der Messsignale und für den Ausgang des Ausgangssignals.

Das Fahrzeug 1 beziehungsweise das System umfasst außerdem eine Anzeige- und/oder Aufzeichnungseinheit 12. Vorliegend ist die Vorrichtung 10 in der Anzeige- und/oder Aufzeichnungseinheit 12 integriert. Wird ein Manipulationsversuch detektiert, so wird bei dem Verfahren ein Ausgangssignal erzeugt, das repräsentativ für den Manipulationsversuch ist. Dieses Ausgangssignal kann in der Anzeige- und/oder Aufzeichnungseinheit 12 gespeichert oder von dieser einem Fahrzeugführer angezeigt werden. Beispielsweise handelt es sich bei der Anzeige- und/oder Aufzeichnungseinheit 12 um einen digitalen Tachographen.

## Patentansprüche

1. Verfahren zur Erfassung eines Manipulationsversuches an einem Sensor (3) eines Fahrzeuges (1), wobei der Sensor (3) dazu eingerichtet ist, im bestimmungsgemäßen Betrieb einen Messwert einer ersten Messgröße zu erfassen und ein für diesen Messwert repräsentatives erstes Messsignal auszugeben, wobei die erste Messgröße verschieden von einer Temperatur ist, umfassend die Schritte:
A1) Einlesen eines zweiten Messsignals, das repräsentativ für einen Messwert der Temperatur des Sensors (3) ist;
B) Ermitteln, ob das zweite Messsignal eine vorgegebene Schwelle unterschreitet oder überschreitet;
C) Ausgeben eines Ausgangssignals, das repräsentativ für einen Manipulationsversuch an dem Sensor (3) ist, falls im Schritt B) ermittelt wird, dass das zweite Messsignal die vorgegebene Schwelle unterschreitet oder überschreitet; wobei ferner
- das zweite Messsignal repräsentativ für eine Temperatur eines ersten Bereichs (31) des Sensors (3) ist,
- das Verfahren weiter einen Schritt umfasst:
A2) Einlesen eines dritten Messsignals, das repräsentativ für eine Temperatur in einem vom ersten Bereich (31) verschiedenen zweiten Bereich (32) des Fahrzeuges (1) ist;
- die Schwelle abhängig von dem dritten Messsignal vorgegeben wird.

2. Verfahren nach Anspruch 1,
wobei das zweite Messsignal repräsentativ für eine Temperatur ist, die mit einem dem Sensor (3) zugeordneten zweiten Messaufnehmer (41) erfasst wurde.

3. Verfahren nach einem der vorhergehenden Ansprüche,
wobei der Sensor (3) ein Wägesensor (3) ist, der einer Achse (2) des Fahrzeuges (1) zugeordnet ist.

4. Verfahren nach einem der vorhergehenden Ansprüche,
wobei die Schritte A1) bis C) mehrmals hintereinander ausgeführt werden.

5. Verfahren nach einem der vorhergehenden Ansprüche,
wobei das Ausgangssignal Informationen darüber enthält, zu welchem Zeitpunkt das Ausgangssignal erzeugt wurde.

6. Vorrichtung (10) zur Erfassung eines Manipulationsversuches an einem Sensor (3) eines Fahrzeuges (1), die dazu eingerichtet ist, ein Verfahren nach einem der vorhergehenden Ansprüche auszuführen.

7. System zur Erfassung eines Manipulationsversuches an einem Sensor (3) eines Fahrzeuges (1), umfassend:
- eine Vorrichtung (10) nach Anspruch 6,
- einen Sensor (3) für ein Fahrzeug (1), der Sensor (3) umfassend:
- einen ersten Messaufnehmer (33) zur Erfassung einer ersten Messgröße, die verschieden von einer Temperatur ist,
- einen zweiten Messaufnehmer (41) zur Erfassung einer Temperatur eines ersten Bereichs (31) des Sensors (3),
- einen dritten Messaufnehmer (42) zur Erfassung einer Temperatur eines von dem ersten Bereich (31) verschiedenen zweiten Bereichs (32) des Sensors (3).

8. System zur Erfassung eines Manipulationsversuches an einem Sensor (3) eines Fahrzeuges (1), umfassend:
- eine Vorrichtung (10) nach Anspruch 6,
- einen Sensor (3) für ein Fahrzeug (1), umfassend:
- einen ersten Messaufnehmer (33) zur Erfassung einer ersten Messgröße, die verschieden von einer Temperatur ist,
- einen zweiten Messaufnehmer (41) zur Erfassung einer Temperatur eines ersten Bereichs (31) des Sensors (3);
das System ferner umfassend:
- einen dritten Messaufnehmer zur Erfassung einer Temperatur in einem von dem ersten Bereich verschiedenen zweiten Bereich des Fahrzeugs (1), wobei der zweite Bereich ein Bereich außerhalb des Sensors (3) ist.

9. Fahrzeug (1), umfassend
- ein System nach Anspruch 7 oder 8 zur Erfassung eines Manipulationsversuchs an einem Sensor (3),
- eine Achse (2), welcher der Sensor (3) zugeordnet ist.

## Claims

1. Method for detecting an attempt to manipulate a sensor (3) of a vehicle (1), wherein the sensor (3) is configured to capture a measured value of a first measurement variable during intended operation and to output a first measurement signal representative of this measured value, wherein the first measurement variable differs from a temperature, said method comprising the steps of:
A1) reading in a second measurement signal which is representative of a measured value of the temperature of the sensor (3);
B) determining whether the second measurement signal falls below or exceeds a predefined threshold;
C) outputting an output signal which is representative of an attempt to manipulate the sensor (3) if it is determined in step B) that the second measurement signal falls below or exceeds the predefined threshold; wherein furthermore
- the second measurement signal is representative of a temperature of a first region (31) of the sensor (3),
- the method also comprises a step of:
A2) reading in a third measurement signal which is representative of a temperature in a second region (32) of the vehicle (1) that differs from the first region (31);
- the threshold is predefined on the basis of the third measurement signal.

2. Method according to Claim 1,
wherein the second measurement signal is representative of a temperature which has been captured using a second measuring sensor (41) assigned to the sensor (3).

3. Method according to one of the preceding claims,
wherein the sensor (3) is a weighing sensor (3) which is assigned to an axle (2) of the vehicle (1).

4. Method according to one of the preceding claims,
wherein steps A1) to C) are carried out several times in succession.

5. Method according to one of the preceding claims,
wherein the output signal contains information relating to the time at which the output signal was generated.

6. Apparatus (10) for detecting an attempt to manipulate a sensor (3) of a vehicle (1), which apparatus is configured to carry out a method according to one of the preceding claims.

7. System for detecting an attempt to manipulate a sensor (3) of a vehicle (1), comprising:
- an apparatus (10) according to Claim 6,
- a sensor (3) for a vehicle (1), the sensor (3) comprising:
- a first measuring sensor (33) for capturing a first measurement variable which differs from a temperature,
- a second measuring sensor (41) for capturing a temperature of a first region (31) of the sensor (3),
- a third measuring sensor (42) for capturing a temperature of a second region (32) of the sensor (3) that differs from the first region (31).

8. System for detecting an attempt to manipulate a sensor (3) of a vehicle (1), comprising:
- an apparatus (10) according to Claim 6,
- a sensor (3) for a vehicle (1), comprising:
- a first measuring sensor (33) for capturing a first measurement variable which differs from a temperature,
- a second measuring sensor (41) for capturing a temperature of a first region (31) of the sensor (3);
the system also comprising:
- a third measuring sensor for capturing a temperature in a second region of the vehicle (1) that differs from the first region, wherein the second region is a region outside the sensor (3).

9. Vehicle (1) comprising
- a system according to Claim 7 or 8 for detecting an attempt to manipulate a sensor (3),
- an axle (2), to which the sensor (3) is assigned.

## Revendications

1. Procédé permettant de détecter une tentative de manipulation sur un capteur (3) d'un véhicule (1), le capteur (3) étant conçu pour détecter en cours de fonctionnement conforme une valeur de mesure d'une première grandeur de mesure et pour sortir un premier signal de mesure représentatif de cette valeur de mesure, la première grandeur de mesure étant différente d'une température, comprenant les étapes consistant à :
A1) lire un deuxième signal de mesure qui est représentatif d'une valeur de mesure de la température du capteur (3) ;
B) établir si le deuxième signal de mesure est inférieur ou supérieur à un seuil prédéfini ;
C) sortir un signal de sortie qui est représentatif d'une tentative de manipulation sur le capteur (3) s'il est établi à l'étape B) que le deuxième signal de mesure est inférieur ou supérieur au seuil prédéfini ; dans lequel en outre
- le deuxième signal de mesure est représentatif d'une température d'une première zone (31) du capteur (3),
- le procédé comprend en outre une étape consistant à :
A2) lire un troisième signal de mesure qui est représentatif d'une température dans une deuxième zone (32) du véhicule (1), différente de la première zone (31) ;
- le seuil est prédéfini en fonction du troisième signal de mesure.

2. Procédé selon la revendication 1, dans lequel le deuxième signal de mesure est représentatif d'une température qui a été détectée par un deuxième élément de mesure (41) associé au capteur (3).

3. Procédé selon l'une quelconque des revendications précédentes, dans lequel le capteur (3) est un capteur de pesage (3) qui est associé à un essieu (2) du véhicule (1).

4. Procédé selon l'une quelconque des revendications précédentes, dans lequel les étapes A1) à C) sont effectuées plusieurs fois successivement.

5. Procédé selon l'une quelconque des revendications précédentes, dans lequel le signal de sortie contient des informations au sujet du moment où le signal de sortie a été généré.

6. Dispositif (10) permettant de détecter une tentative de manipulation sur un capteur (3) d'un véhicule (1), qui est conçu pour exécuter un procédé selon l'une quelconque des revendications précédentes.

7. Système permettant de détecter une tentative de manipulation sur un capteur (3) d'un véhicule (1), comprenant :
- un dispositif (10) selon la revendication 6,
- un capteur (3) pour un véhicule (1), le capteur (3) comprenant :
- un premier élément de mesure (33) pour détecter une première grandeur de mesure qui est différente d'une température,
- un deuxième élément de mesure (41) pour détecter une température d'une première zone (31) du capteur (3),
- un troisième élément de mesure (42) pour détecter une température d'une deuxième zone (32) du capteur (3), différente de la première zone (31).

8. Système permettant de détecter une tentative de manipulation sur un capteur (3) d'un véhicule (1), comprenant :
- un dispositif (10) selon la revendication 6,
- un capteur (3) pour un véhicule (1), comprenant :
- un premier élément de mesure (33) pour détecter une première grandeur de mesure qui est différente d'une température,
- un deuxième élément de mesure (41) pour détecter une température d'une première zone (31) du capteur (3) ;
le système comprenant en outre :
- un élément de mesure pour détecter une température dans une deuxième zone du véhicule (1), différente de la première zone, la deuxième zone étant une zone en dehors du capteur (3).

9. Véhicule (1), comprenant :
- un système selon la revendication 7 ou 8 permettant de détecter une tentative de manipulation sur un capteur (3),
- un essieu (2) auquel est associé le capteur (3).
